# FASCICULE DE BREVET EUROPEEN

(11) **EP 0 847 550 B1**
(45) Date de publication et mention de la délivrance du brevet: **14.05.2003**
(21) Numéro de dépôt: 97930594.3
(22) Date de dépôt: 26.06.1997
(51) Int. Cl.: G06F 1/30

(54) **DISPOSITIF POUR COMMUNIQUER AVEC UN SUPPORT DE DONNEES PORTABLE**
VORRICHTUNG ZUM KOMMUNIZIEREN MIT EINEM TRAGBAREN DATENMEDIUM
DEVICE FOR COMMUNICATING WITH A PORTABLE DATA MEDIUM

(30) Priorité: 01.07.1996 FR 9608179
(43) Date de publication de la demande: 17.06.1998
(73) Titulaire: CP8 Technologies, 78431 Louveciennes (FR)
(72) Inventeur: LAFON, Jean-Pierre, F-92320 Chatillon (FR)
(74) Mandataire: Corlu, Bernard
(86) Numéro de dépôt international: FR9701141
(87) Numéro de publication internationale: WO98000772

(56) Documents cités:
- EP-A- 0 371 383
- EP-A- 0 717 341
- PATENT ABSTRACTS OF JAPAN vol. 95, no. 006, 31 juillet 1995 & JP 07 084687 A (SEIKO EPSON CORP), 31 mars 1995,
- "IMPENDING DEVICE REMOVAL DETECTION FOR PERSONAL COMPUTER MEMORY CARD INTERNATIONAL ASSOCIATION DISK DRIVES" IBM TECHNICAL DISCLOSURE BULLETIN, vol. 37, no. 9, 1 septembre 1994, page 51/52 XP000473328

## Description

L'invention concerne un dispositif pour communiquer avec un support de données portable selon une communication mettant en oeuvre au moins un signal d'alimentation fourni par une source d'énergie électrique, un signal de commande, et un signal de transmission de données.

Typiquement, le support de données portable peut être une carte à puce incorporant un microprocesseur ou des circuits logiques microcablés définissant des zones dont l'accès est contrôlé et peuvent donc renfermer des informations secrètes telles que des clés cryptographiques (voir par exemple l'objet portatif décrit dans le brevet américain US-A-4.211.919).

PATENT ABSTRACTS OF JAPAN vol. 95, no. 006, 31 juillet 1995 & JP-A- 07 084687 A (SEIKO EPSON CORP), 31 mars 1995, décrivent un dispositif pour communiquer avec un support de données portable (carte) dans lequel, lorsque le retrait de la carte est détecté, la transmission de données est interrompue selon un séquencement prédéterminé et l'alimentation de la carte est coupée.

EP-A-0 371 383 (KABUSHIKI KAISHA TOSHIBA) décrit comment l'alimentation d'un écran d'affichage est interrompue lorsque sa déconnection est détectée; un condensateur est connecté à la sortie de la ligne d'alimentation après l'interrupteur d'alimentation.

EP-A-0 717 341 (IBM) propose, lors de la détection d'un problème (sur-courant) dans l'alimentation d'une carte, de suspendre la transmission de données et l'alimentation de la carte.

L'article 'IMPENDING DEVICE REMOVAL DETECTION FOR PERSONAL COMPUTER MEMORY CARD INTERNATIONAL ASSOCIATION DISK DRIVES', publié dans IBM TECHNICAL DISCLOSURE BULLETIN, vol. 37, no. 9, 1 septembre 1994, page 51/52, XP000473328, décrit un circuit contenant un interrupteur destiné à détecter le retrait d'une carte PCMCIA et à générer une interruption avant que l'alimentation ne soit coupée.

L'invention vise à proposer une solution originale pour résoudre le problème général du séquencement des signaux, en vue notamment de respecter les normes applicables en l'espèce (par exemple la norme ISO7816-3). Elle permet de satisfaire de façon simple aux exigences contradictoires de détection de l'interruption du signal d'alimentation en cas d'arrachement du support de données portable, et de poursuite de la fourniture de ce signal au support de données portable pendant un temps donné, après cette détection.

Le dispositif selon l'invention comprend à cet effet :
des moyens d'interruption disposés entre la source d'énergie électrique et le support de données portable et commandés par ce dernier de façon qu'ils interrompent la fourniture du signal d'alimentation au support de données portable à partir de la source d'énergie électrique si le support de données portable n'est pas présent dans le dispositif et qu'ils autorisent cette fourniture si le support de données portable est présent dans le dispositif ;
   - des moyens de stockage d'énergie agencés pour stocker de l'énergie électrique reçue de la source d'énergie électrique , reliés à une entrée d'alimentation du support de données portable de façon à fournir ledit signal d'alimentation à celui-ci pendant un temps prédéterminé, après une interruption de ladite fourniture du signal d'alimentation à partir de la source d'énergie électrique ;
   - des moyens de traitement de l'information agencés pour assurer une transmission au support de données portable desdits signaux selon un séquencement prédéterminé, et pour interrompre cette transmission selon un séquencement prédéterminé, ainsi que pour détecter l'interruption de la fourniture du signal d'alimentation à partir de la source d'énergie électrique , puis déclencher l'interruption des autres signaux selon ledit séquencement prédéterminé pendant la fourniture du signal d'alimentation à partir des moyens de stockage d'énergie.

D'autres détails et avantages de l'invention au cours de la description suivante de quelques formes de réalisation préférées mais non limitatives, en regard des dessins annexés, sur lesquels :
La figure 1 est un schéma de principe du dispositif selon l'invention ;
La figure 2 est le schéma d'une forme de réalisation préférée du dispositif selon l'invention ;
La figure 3 est un chronogramme des signaux d'échange avec une carte à puce, selon la norme ISO 7816-3 ; et
La figure 4 est un chronogramme des signaux d'échange entre le dispositif 1 selon l'invention et la carte à puce 2 de la figure 2.

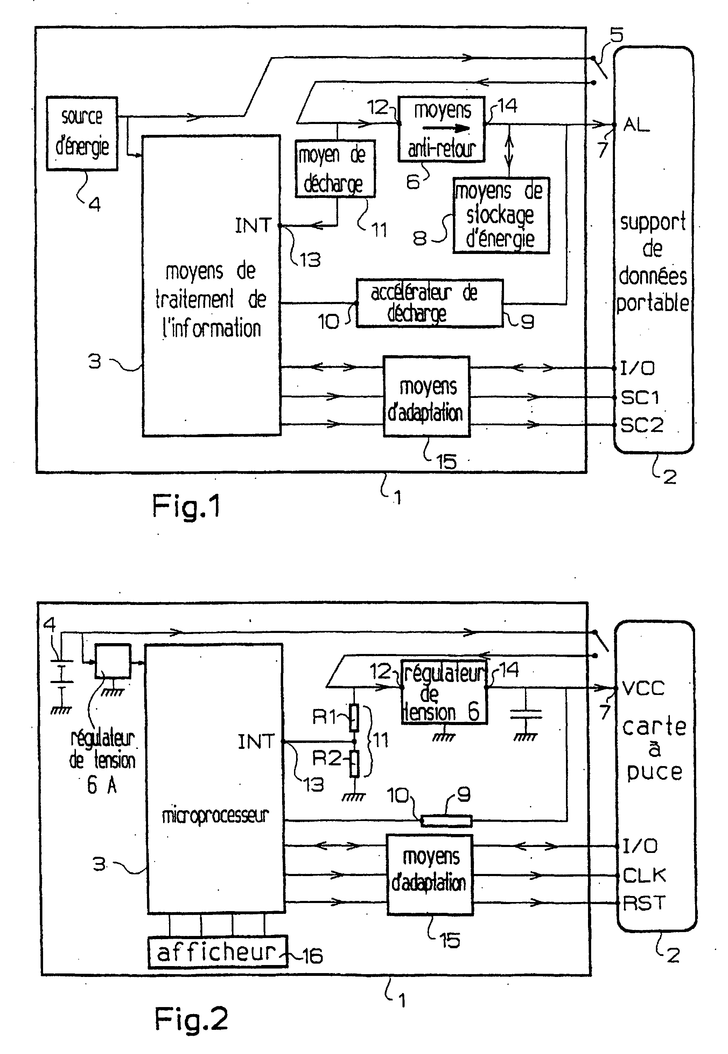

Sur la figure 1, on a représenté un dispositif 1 destiné à coopérer avec un support de données portable 2. Le dispositif 1 comprend des moyens de traitement de l'information 3 sous la forme d'un microprocesseur ou de circuits logiques microcablés, incluant des moyens de mémorisation de l'information. Ces moyens de traitement de l'information 3 comprennent des moyens agencés pour gérer une communication avec le support de données portable 2, et notamment pour contrôler une pluralité de signaux, précisés ci-après, utilisés pour conduire cette communication de façon que ceux-ci apparaissent et disparaissent selon un séquencement prédéterminé, conforme à une norme éventuellement applicable. Dans le cas d'un microprocesseur, ces moyens comprennent un programme spécifique. Dans le cas de circuits logiques microcablés, ils comprennent des circuits logiques microcablés spécifiques.

Le dispositif 1 comprend encore une source d'énergie électrique 4 reliée d'une part aux moyens de traitement de l'information 3, et d'autre part au support de données portable 2 par l'intermédiaire d'un interrupteur de présence du support de données portable 5 monté en série avec des moyens anti-retour 6. Ces moyens anti-retour 6 sont reliés à une entrée d'alimentation 7 du support de données portable 2 destinée à recevoir un signal d'alimentation AL. La source d'énergie électrique 4 peut par exemple comprendre une source de tension constituée d'un générateur électrique tel qu'une pile, une cellule photovoltaïque, ou un condensateur de capacité très élevée. Dans une variante de réalisation moins préférée, la source d'énergie électrique 4 est extérieure au dispositif 1.

L'interrupteur 5 de présence du support est tel qu'il se ferme quand le support de données portable 2 est introduit dans un connecteur équipant le dispositif 1 et agencé pour recevoir le support de données portable 2. Le dispositif 1 comprend encore des moyens de stockage d'énergie 8 reliés à une sortie 14 des moyens anti-retour 6 et agencés pour stocker de l'énergie électrique reçue de la source d'énergie électrique 4. Les moyens anti-retour 6 sont agencés pour empêcher un retour d'énergie électrique depuis les moyens de stockage d'énergie 8 vers des moyens de décharge 11. Ils comprennent par exemple une diode, un transistor, ou un circuit de régulation agencé pour effectuer cette fonction.

Le dispositif 1 comprend encore un accélérateur de décharge 9 relié d'un côté aux moyens de stockage d'énergie 8, et comportant d'un autre côté une borne 10 par laquelle il est relié aux moyens de traitement de l'information 3. L'accélérateur de décharge 9 est agencé pour décharger les moyens de stockage d'énergie 8 par écoulement de l'énergie électrique en étant piloté par les moyens de traitement de l'information 3 . Il comprend par exemple une résistance, un transistor ou une combinaison de transistors, ou une porte logique.

Les moyens de décharge 11 précités comprennent une entrée reliée à une entrée 12 des moyens anti-retour 6 par laquelle ceux-ci sont eux-mêmes reliés à l'interrupteur 5 de présence du support, et une sortie qui attaque une entrée d'interruption 13 des moyens de traitement de l'information 3. Ces moyens sont agencés pour décharger instantanément l'énergie électrique présente sur la borne 12 lors de l'ouverture de l'interrupteur 5 de présence du support, de façon que les moyens de traitement de l'information 3 détectent cette ouverture. Ils comprennent par exemple une ou plusieurs résistances, ou un ou plusieurs transistors. Ces moyens de décharge 11 ne sont nécessaires que dans les cas où on ne peut obtenir en pratique de capacité nulle à la borne 12, compte tenu des composants utilisés, et où il faut par conséquent décharger cette capacité.

Les moyens anti-retour 6, comme les moyens de décharge 11, peuvent être remplacés par tout autre moyen de détection de l'arrêt de la fourniture du signal d'alimentation AL à partir de la source d'énergie électrique 4 situé à tout endroit du dispositif 1 lui permettant d'effectuer cette détection. Ce moyen peut être un moyen de mesure de courant nul entre la source d'énergie électrique 4 et les moyens de stockage d'énergie 8, par exemple par des moyens optiques ou inductifs.

Le dispositif 1 comprend encore de préférence des moyens d'adaptation 15 pour fournir au support de données portable 2 des signaux de commande SC1 et SC2, et pour échanger avec lui un signal de transmission de données I/O. Ces moyens d'adaptation 15 sont destinés à mettre ces signaux en conformité avec la norme éventuellement applicable.

Naturellement, les différents moyens du dispositif 1 définis ci-dessus pourront se retrouver physiquement sur un même et unique composant à microprocesseur ou à circuits logiques microcablés, et pas nécessairement sur des composants distincts.

En fonctionnement, lors de l'insertion du support de données portable 2 dans le dispositif 1, l'interrupteur 5 de présence du support
se ferme, provoquant les effets suivants :
- l'entrée 12 des moyens anti-retour 6 passe d'un niveau d'énergie électrique bas à un niveau d'énergie électrique haut ;
- les moyens de décharge 11 répercutent, sur l'entrée 13 des moyens de traitement de l'information 3, ce niveau d'énergie électrique haut informant ceux-ci que le support de données portable 2 a été inséré et qu'il y a donc lieu d'engager une procédure de communication avec lui ;
- les moyens de stockage d'énergie 8 se chargent ;
- le support de données portable 2 reçoit, par son entrée d'alimentation 7, l'énergie électrique permettant de le faire fonctionner ;
- l'accélérateur de décharge 9 est maintenu en position inactive par les moyens de traitement de l'information 3, qui agissent sur la borne 10.
- les moyens de traitement de l'information 3 sont agencés pour provoquer l'apparition des signaux I/O,SC1,SC2 selon un séquencement prédéterminé, conforme à la norme éventuellement applicable.

Le dispositif 1 et le support de données portable 2 sont alors prêts pour conduire une procédure de dialogue.

Lors de l'extraction ultérieure du support de données portable 2 hors du dispositif 1, l'interrupteur 5 de présence du support
s'ouvre, provoquant les effets suivants :
- l'entrée 12 des moyens anti-retour 6 passe d'un niveau d'énergie électrique haut à un niveau d'énergie électrique bas ;
- les moyens de décharge 11 répercutent, sur l'entrée 13 des moyens de traitement de l'information 3, ce niveau d'énergie électrique bas qui est détecté par les moyens de traitement de l'information 3, lesquels interrompent toute opération de traitement en cours pour déclencher une suppression des signaux I/O,SC1,SC2 selon un séquencement prédéterminé, conforme à la norme éventuellement applicable ;
- ensuite, l'accélérateur de décharge 9, piloté par les moyens de traitement de l'information 3 au travers de sa borne 10, vient décharger les moyens de stockage d'énergie 8, ce qui a pour effet d'amener l'énergie électrique disponible sur l'entrée d'alimentation 7 du support de données portable 2 à zéro, de façon à préparer une déconnection de celui-ci par rapport au dispositif 1.

Sur la figure 2, les éléments homologues de ceux de la figure 1 portent les mêmes références. Les moyens de traitement de l'information 3 comprennent un microprocesseur, la source d'énergie électrique 4 comprend deux piles montées en série, les moyens de décharge 11 comprennent deux résistances R1,R2 montées en série entre la borne 12 du régulateur de tension 6 et une masse du dispositif 1 , un point commun de ces résistances étant relié à la borne 13 du microprocesseur. Les moyens anti-retour 6 comprennent un régulateur linéaire de tension ou régulateur "low drop out" ayant la propriété de fournir une faible chute de tension en sortie ; un régulateur de tension identique 6A est interposé entre la source d'énergie électrique 4 et le microprocesseur 3.

Les moyens de stockage d'énergie comprennent un condensateur 8 monté entre la borne 14 du régulateur de tension et la masse. L'accélérateur de décharge comprend une résistance 9 montée entre la borne 14 et le microprocesseur.

Le signal d'alimentation AL est représenté par un signal de tension VCC ; les signaux de commande comprennent un signal d'horloge CLK et un signal de réinitialisation RST.

Le support de données portable est représenté par une carte à puce 2 du type carte de crédit.

Dans une forme de réalisation préférée, le dispositif 1 est portable et a la taille d'un étui de carte à puce, tandis que le microprocesseur 3 est pourvu en outre d'un afficheur 16 et est agencé pour que, une fois la carte à puce 2 insérée dans le connecteur du dispositif 1, l'afficheur 16 affiche automatiquement un solde d'un compte se trouvant dans la carte à puce 2, ainsi que d'autres informations éventuelles. Le dispositif 1 peut alors constituer avantageusement un lecteur personnel de solde ne nécessitant d'un usager aucune manipulation particulière.

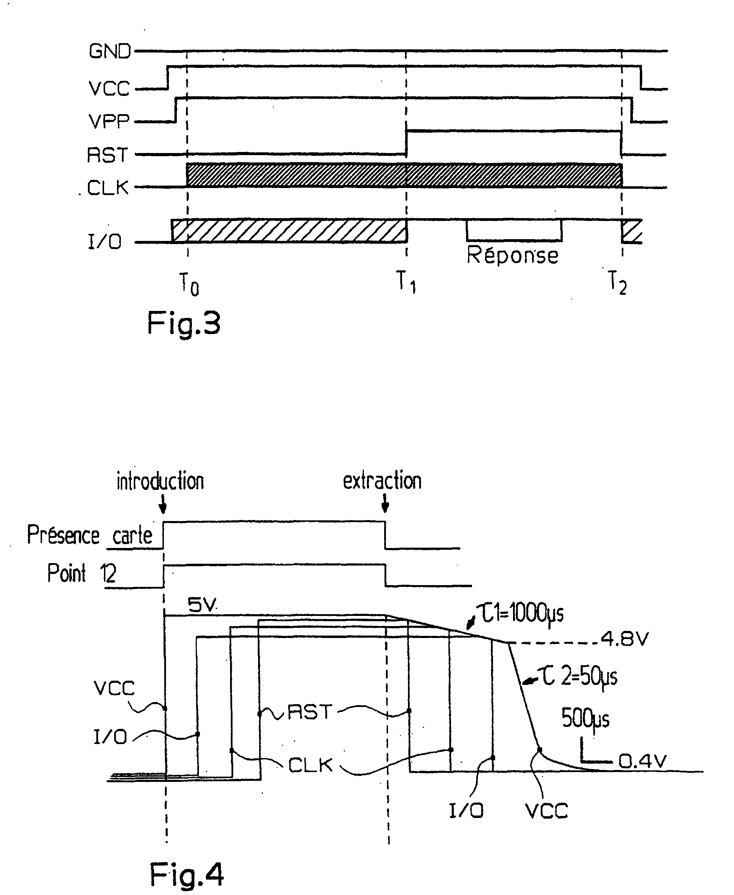

D'une façon générale, les échanges de données avec une carte à puce sont codifiés par la norme ISO 7816 dont la partie 7816-3 concerne le séquencement des différents signaux appliqués à la carte à puce, à savoir le signal de référence de potentiel GND, le signal d'alimentation VCC, le signal d'alimentation des mémoires VPP, le signal d'horloge CLK, le signal de réinitialisation RST et le signal d'échange de données I/O, comme cela est représenté sur le chronogramme de la figure 3.

On voit que, lors de l'établissement de l'échange, les signaux VCC, VPP, CLK et RST doivent être fournis dans cet ordre ; le signal VPP n'étant généralement pas utilisé est alors court-circuité par raccordement avec le signal VCC. A la fin de l'échange, les signaux précités doivent disparaître dans l'ordre inverse.

Sur la figure 4, une courbe "présence carte" définit la situation de la carte à puce 2 vis-à vis du dispositif 1 (insérée ou extraite), et une autre courbe "point 12" définit l'évolution du potentiel au point 12 de la figure 2. Enfin, un troisième diagramme représente plusieurs courbes imbriquées. A l'insertion de la carte à puce 2, apparaissent successivement le signal de tension VCC , le signal de transmission de données I/O, le signal d'horloge CLK, et le signal de réinitialisation RST, ces signaux disparaissant, lors de l'arrachement carte, dans l'ordre inverse.

Tandis que le séquencement d'apparition des signaux est géré par un programme spécifique du microprocesseur , le séquencement de disparition de ces signaux fait également intervenir les moyens électroniques de la figure 2.

La courbe du signal de tension VCC englobe toutes les autres. A l'arrachement carte, elle décroît selon deux phases correspondant à deux constantes de temps successives : τ1=1000 µs et τ2=50 µs, en respectant un gabarit de décroissance imposé par la norme ISO7816-3 et représenté sur la figure : VCC < 0,4 V au bout de 500 µs après l'arrachement carte.

Le fait que les signaux I/O, RST, CLK soient produits à partir d'une tension du microprocesseur , elle-même issue de la tension VCC fournie à ce dernier, garantit que leur niveau est toujours inférieur à celui de VCC. Les résistances R1,R2 permettent, en association avec le régulateur de tension 6, de détecter l'arrachement carte. Le condensateur 8 permet de continuer à alimenter la carte à puce 2 pendant la mise à zéro des signaux I/O, RST, CLK qui s'effectue à l'intérieur de la phase à constante de temps τ1, et la résistance 9, en association avec le microprocesseur, permet d'accélérer la décroissance de VCC après cette mise à zéro, dans la phase à constante de temps τ2.

## Revendications

1. Dispositif pour communiquer avec un support de données portable selon une communication mettant en oeuvre au moins un signal d'alimentation (AL) fourni par une source d'énergie électrique (4), un signal de commande (SC1), et un signal de transmission de données (I/O), comprenant:
- des moyens d'interruption (5) disposés entre la source d'énergie électrique et le support de données portable et commandés par ce dernier de façon qu'ils interrompent la fourniture du signal d'alimentation (AL) au support de données portable à partir de la source d'énergie électrique (4) si le support de données portable (2) n'est pas présent dans le dispositif (1) et qu'ils autorisent cette fourniture si le support de données portable (2) est présent dans le dispositif (1) ;
- des moyens de stockage d'énergie (8) agencés pour stocker de l'énergie électrique reçue de la source d'énergie électrique (4), reliés à une entrée d'alimentation (7) du support de données portable (2) de façon à fournir ledit signal d'alimentation à celui-ci pendant un temps prédéterminé, après une interruption de ladite fourniture du signal d'alimentation (AL) à partir de la source d'énergie électrique (4) ;
- des moyens de traitement de l'information (3) agencés pour assurer une transmission au support de données portable desdits signaux (AL,SC1,I/0) selon un séquencement prédéterminé, et pour interrompre cette transmission selon un séquencement prédéterminé, ainsi que pour détecter l'interruption de la fourniture du signal d'alimentation (AL) à partir de la source d'énergie électrique (4), puis déclencher l'interruption des autres signaux (SC1,I/O) selon ledit séquencement prédéterminé pendant la fourniture du signal d'alimentation à partir des moyens de stockage d'énergie.

2. Dispositif selon la revendication 1, qui comprend des moyens anti-retour (6) disposés entre les moyens d'interruption (5) et les moyens de stockage d'énergie et agencés pour empêcher un retour d'énergie électrique depuis les moyens de stockage d'énergie vers les moyens d'interruption (5).

3. Dispositif selon la revendication 1, qui comprend des moyens de décharge (9) agencés pour décharger les moyens de stockage d'énergie (8) une fois que ladite interruption des autres signaux (SC1,I/O) selon ledit séquencement prédéterminé a été effectuée, les moyens de décharge étant commandés par les moyens de traitement de l'information (3).

## Claims

1. Device for communication with a portable data medium using a communication method involving at least a power supply signal (AL) delivered by electric power source (4), a command signal (SC1) and a data transmission signal (I/O), comprising:
- interrupt means (5) inserted between the electric power source and the portable data medium, and controlled by the latter in such a way that they interrupt delivery of power supply signal (AL) to the portable data medium from electric power source (4) if portable data medium 2 is not present in device (1), and authorize delivery of the power supply signal if portable data medium 2 is inserted in device (1);
- power storage means (8) designed to store electric power received from electric power source (4), connected to power supply input (7) of portable data medium (2), so as to supply said power supply signal to the portable data medium during a predetermined time, following interruption of said supply of power supply signal (AL) from electric power source (4);
- information processing means (3) designed to insure transmission of said signals (AL, SC1 and I/O) to the portable data medium in a predetermined sequence, and to interrupt said transmission according to a predetermined sequence, and detect interruption of delivery of power supply signal (AL) from electric power source (4), then initiate interruption of the other signals (SC1 and I/O) in accordance with said predetermined sequence, during delivery of the power supply signal from the power storage means.

2. Device according to claim 1, incorporating blocking means (6) placed between interrupt means (5) and the power storage means, designed to prevent the return of electric power from the power storage means to interrupt means (5).

3. Device according to claim 1, incorporating discharge means (9) designed to discharge power storage means (8) when interruption of the other signals (SC1 and I/O) in accordance with said predetermined sequence has occurred, said discharge means being controlled by information processing means (3).

## Patentansprüche

1. Vorrichtung zur Kommunikation mit einem tragbaren Datenträger gemäß einem Kommunikationsschema, bei dem mindestens ein von einer elektrischen Energiequelle (4) abgegebenes Versorgungssignal (AL), ein Steuersignal (SC1) und ein Datenübertragungssignal (I/O) zum Einsatz kommen und welches umfasst:
- Unterbrechungsmittel (5), die zwischen der elektrischen Energiequelle und dem tragbaren Datenträger angeordnet sind und von letzterem derart gesteuert werden, dass sie die Abgabe des Versorgungssignals (AL) durch die elektrische Energiequelle (4) an den tragbaren Datenträger unterbrechen, wenn der tragbare Datenträger 2 nicht in der Vorrichtung (1) vorhanden ist und diese Abgabe freigeben, wenn der tragbare Datenträger 2 in der Vorrichtung (1) vorhanden ist;
- Energiespeichermittel (8), die angeordnet sind, um die von der elektrischen Energiequelle (4) erhaltene elektrische Energie zu speichern und derart mit einem Versorgungseingang (7) des tragbaren Datenträgers (2) verbunden sind, dass sie diesem während eines vorbestimmten Zeitraums nach einer Unterbrechung der besagten Abgabe des Versorgungssignals (AL) durch die elektrische Energiequelle (4) das besagte Versorgungssignal bereitstellen;
- Datenverarbeitungsmittel (3), die angeordnet sind, um gemäß einer vorbestimmten Ablauffolge eine Übertragung der besagten Signale (AL,SC1,I/O) an den tragbaren Datenträger zu gewährleisten und um diese Übertragung gemäß einer vorbestimmten Ablauffolge zu unterbrechen sowie die Abgabeunterbrechung des Versorgungssignals (AL) durch die elektrische Energiequelle (4) zu erkennen und anschließend gemäß der besagten vorbestimmten Ablauffolge die Unterbrechung der anderen Signale (SC1, I/O) während der Abgabe des Versorgungssignals durch die Energiespeichermittel auszulösen.

2. Vorrichtung nach Patentanspruch 1, welche zwischen den Unterbrechungsmitteln (5) und den Energiespeichermitteln eine Rückflusssperre (6) umfasst, die angeordnet ist, um einen Rückfluss der elektrischen Energie von den Energiespeichermitteln zu den Unterbrechungsmitteln (5) zu verhindern.

3. Vorrichtung nach Patentanspruch 1, welche Entladungsmittel (9) umfasst, die angeordnet sind, um die Energiespeichermittel (8) zu entladen, sobald die besagte Unterbrechung der anderen Signale (SC1,I/O) gemäß der besagten vorbestimmten Ablauffolge erfolgt ist, wobei die Entladungsmittel von den Datenverarbeitungsmitteln (3) gesteuert werden.
